# EUROPEAN PATENT SPECIFICATION

(11) **EP 2 807 076 B1**
(45) Date of publication and mention of the grant of the patent: **26.12.2018**
(21) Application number: 12775553.6
(22) Date of filing: 27.08.2012
(51) Int. Cl.: B63B 5/24, B64C 1/06

(54) **PROCESS FOR MANUFACTURING HULL STRUCTURES BY MEANS OF COMPOSITES TUBES**
VERFAHREN ZUR ERSTELLUNG VON RUMPFSTRUKTUREN MITTELS VERBUNDROHREN
PROCÉDÉ DE PRODUCTION DE STRUCTURES DE COQUES PAR MOYEN DE TUYAUX EN MATERIAUX COMPOSITES

(30) Priority: 23.01.2012 IT SP20120002
(43) Date of publication of application: 03.12.2014
(73) Proprietor: Cappello, Giovanni, 92010 Lampedusa e Linosa (AG) (IT)
(72) Inventor: Cappello, Giovanni, 92010 Lampedusa e Linosa (AG) (IT)
(74) Representative: Robba, Pierpaolo
(86) International application number: PCT/IT2012/000260
(87) International publication number: WO 2013/111168

(56) References cited:
- EP-A2- 0 215 698
- WO-A1-97/02945
- DE-U1- 29 820 815
- US-A- 3 575 251
- US-A- 5 522 340
- US-A- 5 806 457
- US-A1- 2004 149 197

## Description

### BACKGROUND ART

The structure of the hull is traditionally a combination of longitudinal and transverse elements, with a prevalence of the ones (longitudinal structure) or the others (transverse structure) depending on the stresses to which they will be subjected during operation.

The search for prior did not produce useful results for the purposes of the subject invention. In fact all documents examined are based on a conception of "spider" structure, which is organized in a traditional way, with the necessary presence of transverse elements.

US5522340 (A) discloses a vessel having a hull comprising an intermediate woven member disposed and bonded between a first inner and second outer walls and comprising a plurality of cylindrical members and parallel fibers woven about said cylindrical members.

Composite materials made of substantially longitudinal parallel tubular elements bond together by means of resin are also disclosed in EP0215698 (A2), WO9702945 (A1), DE29820815 (U1) and US5806457 (A). A further document, US 2004/149197 A1, discloses a method according to the preamble of claim 1.

### DISCLOSURE OF INVENTION

The invention concerns a method of manufacturing a hull according to claim 1, in order to obtain at the same time high strenght and lightness. The "GI.CA. System" naturally turns to the shipbuilding industry and the aerospace industry, whose production is strongly influenced by the factors mentioned above.

The hull structure is composed by a sequence of suitably dimensioned tubes which have the task of withstanding the loads acting on the body.

The characteristics of the tubular shape and the mechanical properties of the chosen material at the same time ensure adequate strength of the structure and guarantee the requested lightness.

The air inside the tubes is also a good reserve of buoyancy: in fact such organized structure behaves as a "double hull", greatly increasing the standard of safety.

Such composed structure is then internally and externally tied by special biaxial fabric.

Although the following descriptions and drawings relate to hull of a boat, the invention is applicable, as will become clear to a person skilled in the sector, also to products with the same structural and performance needs.

### BRIEF DESCRIPTION OF DRAWINGS

The main purpose of the following figures is to show the different types of application of the "GI.CA. System". Therefore it has not been considered the real size of the components, but rather the relationship between the individual parts.

The applicability of this procedure is extremely wide. It's necessary to describe it in a very general way, leaving the structural calculations to individual needs, according to the use of the specific product.

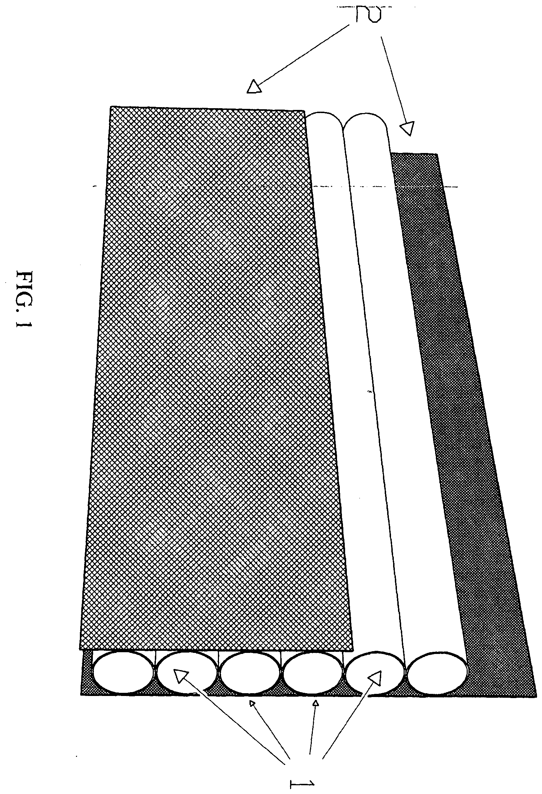

Fig. 1 shows a section of a structure which is organized according to the "GI.CA. System". Are highlighted tubes (1) and interior and exterior upholstery fabric (2). The elements are joined together through the application of epoxy resin. The interstitial spaces are left blank.
Fig. 2, 3, 4, 5, 6, 7 and 8 refer to the hull of a sailing boat of 12,20 metres in length.

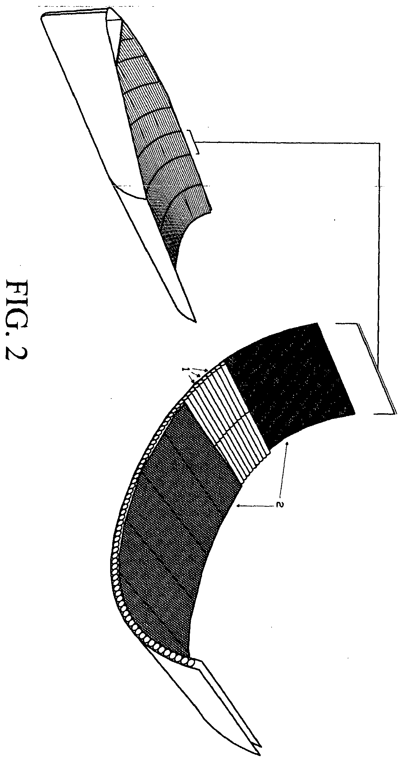

Fig. 2 shows the entire boat hull, a portion of which is shown in detail. In the full-length is omitted the inner fabric in order to highlight the tubes and their arrangement. In section are instead shown in detail the various layers of the "GI.CA. System": the tubes (1) internally and externally covered by biaxial fabric (2). The elements are joined together through the application of epoxy resin. The interstitial spaces are left blank.

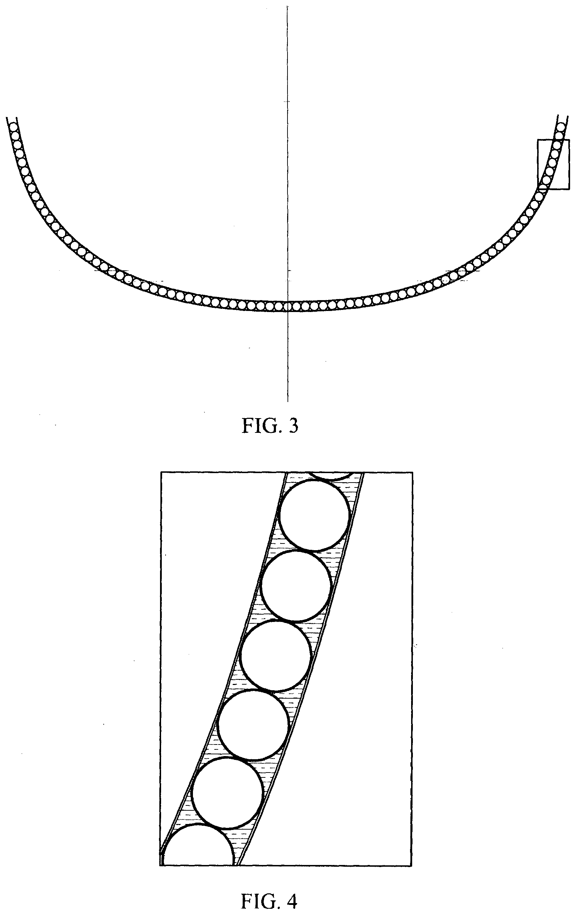

Fig. 3 shows the midship section of the hull. The tubes are arranged in a continuous manner, the one attached to the other. This ensure maximum structural strength and maximum air supply. The interstitial spaces are minimal, and can be left empty, increasing the reserve of buoyancy. Alternatively, these spaces can be filled with epoxy grout lightened, with closed cell foam-SAN or light wood (balsa) suitably shaped.
Fig. 4 shows in detail the continuous arrangement of the tubes and the internal and external biaxial fabric. The interstitial spaces are filled with epoxy grout, which contributes to the strength of the structure.

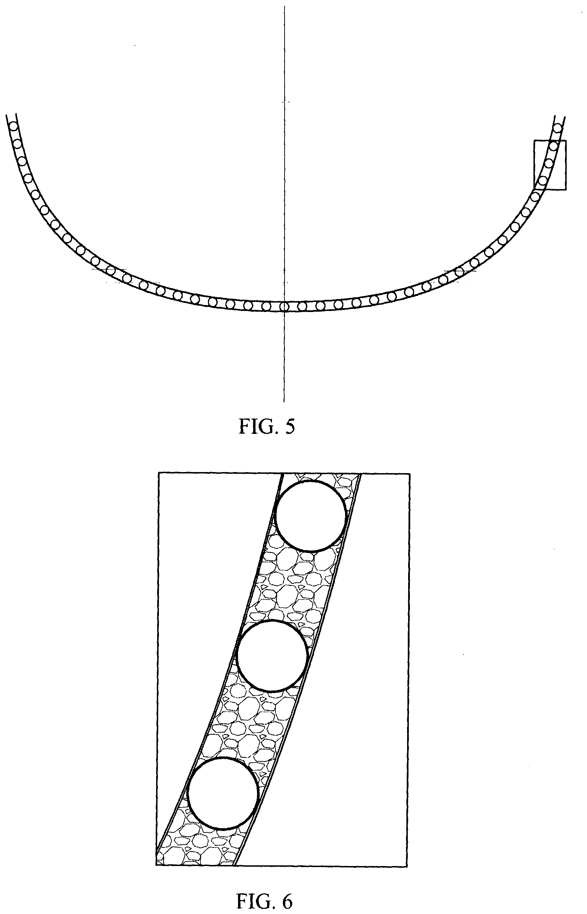

Fig. 5 shows the midship section of the hull. The tubes are separated from each other. This solution requires a greater dimensioning of the components, whose number is pear greatly reduced, resulting in lower production costs. In this case the arrangement of the tubes is kept filling the interstices of suitable material, in order not to complicate too much the structure.
Fig. 6 shows in detail the discontinuous arrangement of the tubes and internal and external biaxial fabric. The interstitial space is filled with closed cell foam-SAN.

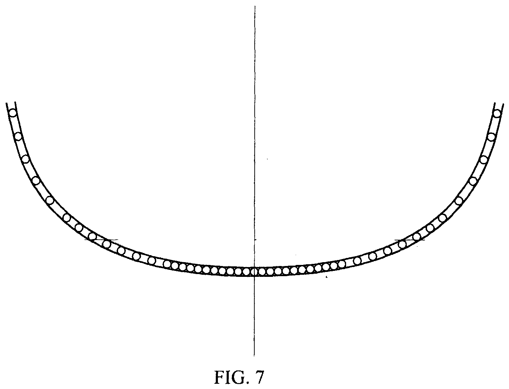

Fig. 7 shows a combination of the solutions described previously. The tubes are arranged at different intervals, depending on the different loads that the structure must withstand: on the bottom, where the hydrodynamic and hydrostatic pressures are more intense, and where the hull must connect to the keel, the tubes are arranged in a continuous manner; climbing along the port, with the reduction of the loads, the tubes are progressively spaced.

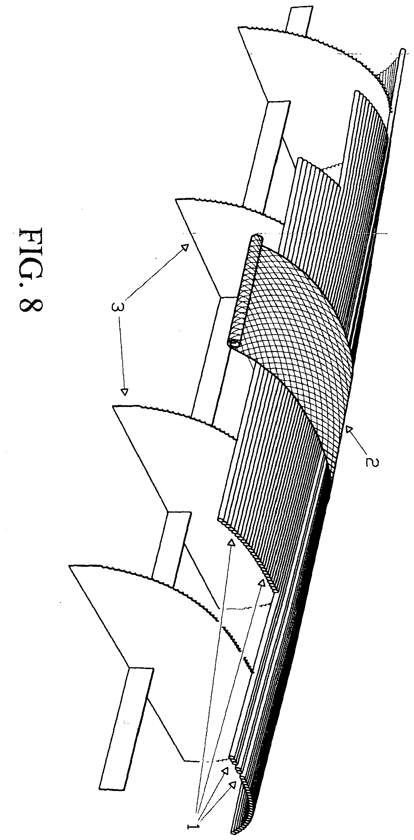

Fig. 8 shows a method for the construction of a hull according to the "GI.CA. System", described below in more detail.

### BEST MODES FOR CARRYING OUT THE INVENTION

### 1^{st} MODE

The tubes (1) are arranged and glued together with epoxy resin on special housing made of wooden frames (3), shaped according to the cross sections of the hull, as shown in fig. 8. The structure thus obtained is then covered externally by biaxial fabric (2) fixed with resin suitable for the material used. The artefact is turned and the frames are removed. We proceed covering the interior, always with the application of resin.

This type of implementation is particularly suitable for models which is not expected to be produced in series, given the relative simplicity of obtaining the frames needed for installation of the tubes.

### 2^{nd} MODE

On a female mold of the hull the tubes are arranged and secured with the application of resin. We proceed to the inside and outside covering, made with biaxial fabric and resin.

Similarly, we can use a male mold, smaller and therefore less expensive: even in this case the tubes are arranged and secured through the application of resin. We proceed to the internal and external coating.

This type of construction is more costly in terms of money and labor, and can be justified in view of a series production of the product, or the possibility to easily obtain the necessary mold.

### EFFECTS OF INVENTION

The application of the production method described above has many effects. The definition of these should be made considering the design level in which is inserted the subject invention. The structural organization is a basic aspect in the development of a hull. By varying this organization we change the concept of the article itself, whose definitive parameters are in turn influenced, if not overturned.

The main results of the application of "GI.CA. System" affect the strength, lightness, safety and habitability.

Strength and lightness are intrinsic characteristics of the chosen material, in particular carbon, whose circulation is greatly expanded in recent years. This implies therefore a greater availability of technologies and a progressive reduction of production costs.

The increased safety and habitability are direct consequences of the proposed procedure. The reserve of air, created by using the tubular structure, makes the artefact unsinkable, without interfering with the internal habitability. In fact experiments of "double hull", realized in a traditional way, have produced a considerable limitation of the liveable space, an element absolutely not negligible given the particular nature of the artefacts in object.

The liveability is also improved by greater freedom to divide the interior, since the transverse elements (bulkheads) contribute little or nothing to the strength of the product.

## Claims

1. Method of manufacturing a hull or fuselage structure comprising the steps of:
- providing a sequence of tubes (1) bent according to the shape of the fuselage, said tubes having a circular cross section;
- arranging the tubes (1) of said sequence in the longitudinal direction perpendicular to the midship section of the hull;
- coating internally and externally or vice-versa the so obtained tubular structure with a biaxial fabric (2) by means of a resin, **characterized in that** the tubes are arranged at different intervals depending on the different local loads that the structure must withstand.

2. Method according to claim 1, wherein the tubes (1) are made of fiberglass, Kevlar, carbon fiber or other composite material, or bamboo canes present in nature.

3. Method according to claim 1, wherein the fabrics are made in the same material of the tubes (1).

4. Method according to claim 1, wherein the interstitial space between the tubes (1) is left blank thus resulting in an additional air supply.

5. Method according to any of the preceding claims, wherein the tubes (1) are arranged at different intervals, depending on the different loads that the structure must withstand, on the bottom and where the hydrodynamic and hydrostatic pressure are more intense, and where the hull connects to the keel, the tubes (1) being arranged in a continuous manner, while climbing along the port, with the reduction of the load, the tubes (1) being progressively spaced.

6. Method according to any of the preceding claims, wherein the following steps are provided:
- providing a special housing made of wooden frames (3) shaped according to the cross section of the hull;
- gluing the tubes (1) together;
- coating externally the so obtained structure by biaxial fabric (2) fixed with resin thereby obtaining a corresponding artefact;
- turning the artefact and removing the frames (3);
- coating internally the structure by biaxial fabric (2) with the application of resin.

7. Method according to any of the preceding claims, wherein the following steps are provided:
- providing a female mold of the hull;
- arranging the tubes (1) on said female mold and securing the tubes (1) together by means of resin;
- coating the so obtained structure inside and outside with biaxial fabric (2) which is fixed to the tubes (1) by means of resin

8. Method according to any of the preceding claims, wherein the following steps are provided:
- providing a male mold of the hull
- arranging the tubes (1) on said male mold and securing the tubes (1) on the mold by means of resin;
- coating the so obtained structure outside and inside with biaxial fabric (2) which is fixed to the tubes (1) by means of resin.

9. Hull or fuselage structure obtained with the method according to any claim from 1 to 8.

## Patentansprüche

1. Verfahren zur Herstellung einer Hüll- oder Rumpfstruktur mit den Schritten:
- Bereitstellen einer Reihe von Rohren (1), die entsprechend der Form des Rumpfes gebogen sind, wobei die Rohre einen kreisförmigen Querschnitt haben,
- Anordnen der Rohre (1) der Reihe in der länglichen Richtung senkrecht zu dem Mittschiffabschnitt des Rumpfes,
- Beschichten der so erhaltenden Rohrstruktur innen und außen oder umgekehrt mit einem biaxialen Gewebe (2) mittels eines Herzes, **dadurch gekennzeichnet, dass**
die Rohre in unterschiedlichen Abständen angeordnet sind, die von den unterschiedlichen lokalen Lasten abhängen, denen die Struktur standhalten muss.

2. Verfahren nach Anspruch 1, wobei die Rohre (1) aus Fiberglas, Kevlar, Carbonfasern oder anderen Verbundmaterialien oder natürlichen Bambusstangen hergestellt sind.

3. Verfahren nach Anspruch 1, wobei die Gewebe aus demselben Material wie die Rohre (1) hergestellt sind.

4. Verfahren nach Anspruch 1, wobei der Zwischenraum zwischen den Rohren (1) freigelassen wird, was zu einer zusätzlichen Luftzufuhr führt.

5. Verfahren nach einem der vorstehenden Ansprüche, wobei die Rohre (1) an dem Boden in unterschiedlichen Abständen, die von den verschiedenen Lasten abhängen, denen die Struktur standhalten muss, und wo der hydrodynamische Druck und der hydrostatische Druck größer sind und wo der Rumpf mit dem Kiehl verbunden ist, angeordnet sind, wobei die Rohre (1) durchgehend angeordnet sind, während sie an der Bordwand aufsteigen, und die Rohe (1) mit abnehmender Last zunehmenden Abstand voneinander haben.

6. Verfahren nach einem der vorstehenden Ansprüche, wobei die nachstehenden Schritte vorgesehen sind:
- Vorsehen eines speziellen Gehäuses aus hölzernen Rahmen (3), die den Querschnitt des Rumpfs entsprechend geformt sind,
- Verleimen der Rohre (1) miteinander,
- Beschichten der erhaltenden Struktur außen durch biaxiales Gewebe (2), das mit Harz befestigt ist, wodurch ein entsprechender Gegenstand erhalten wird,
- Drehen des Gegenstands und Entfernen der Rahmen (3),
- Beschichten der Struktur innen mit biaxialem Gewebe (2) durch Auftragen von Harz.

7. Verfahren nach einem der vorstehenden Ansprüche, wobei die folgenden Schritte vorgesehen sind:
- Bereitstellen einer weiblichen Form des Rumpfes;
- Anordnen der Rohe (1) an der weiblichen Form und Befestigen der Rohre (1) miteinander mittels Harz,
- Beschichten der so erhaltenden Struktur innen und außen mit biaxialem Gewebe (2), das mittels Harz an den Rohren (1) befestigt wird.

8. Verfahren nach einem der vorstehenden Ansprüche, wobei die folgenden Schritte vorgesehen sind:
- Bereitstellen einer männlichen Form des Rumpfes,
- Anordnen der Rohe (1) auf der männlichen Form und Befestigen der Rohre (1) an der Form mittels Harz,
- Beschichten der so erhaltenden Struktur innen und außen mit biaxialem Gewebe (2), das mittels Harz an den Rohren (1) befestigt wird.

9. Hüll- oder Rumpfstruktur hergestellt mit einem Verfahren nach einem der Ansprüche 1 bis 8.

## Revendications

1. Procédé de fabrication d'une structure de coque ou de fuselage comprenant les étapes de :
- fourniture d'une séquence de tubes (1) coudés selon la forme du fuselage, lesdits tubes ayant une section circulaire ;
- agencement des tubes (1) de ladite séquence dans la direction longitudinale perpendiculaire à la coupe au maître de la coque ;
- revêtement en interne et en externe ou vice versa de la structure tubulaire ainsi obtenue avec une étoffe biaxiale (2) au moyen d'une résine, **caractérisé en ce que** les tubes sont agencés à des intervalles différents selon les charges locales différentes que la structure peut supporter.

2. Procédé selon la revendication 1, dans lequel les tubes (1) sont réalisés en fibre de verre, Kevlar, fibre carbone ou autre matériau composite, ou en cannes de bambou présentes dans la nature.

3. Procédé selon la revendication 1, dans lequel les étoffes sont réalisées dans le même matériau que les tubes (1).

4. Procédé selon la revendication 1, dans lequel l'espace interstitiel entre les tubes (1) est laissé vide aboutissant ainsi à une alimentation en air supplémentaire.

5. Procédé selon l'une quelconque des revendications précédentes, dans lequel les tubes (1) sont agencés à des intervalles différents, selon les charges différentes que la structure peut supporter, sur le fond, et où les pressions hydrodynamiques et hydrostatiques sont plus intenses, et où la coque rejoint la carène, les tubes (1) étant agencés de manière continue, tout en montant sur le sabord, avec la réduction de la charge, les tubes (1) étant espacés progressivement.

6. Procédé selon l'une quelconque des revendications précédentes, dans lequel les étapes suivantes sont prévues :
- fourniture d'un logement spécial réalisé en cadres en bois (3) formés selon la section de la coque ;
- collage des tubes (1) ensemble ;
- revêtement en externe de la structure ainsi obtenue par une étoffe biaxiale (2) fixée avec une résine obtenant ainsi un artéfact correspondant ;
- rotation de l'artéfact et enlèvement des cadres (3) ;
- revêtement en interne de la structure par une étoffe biaxiale (2) avec l'application de résine.

7. Procédé selon l'une quelconque des revendications précédentes, dans lequel les étapes suivantes sont prévues :
- fourniture d'un moule femelle de la coque ;
- agencement des tubes (1) sur ledit moule femelle et arrimage des tubes (1) ensemble au moyen d'une résine ;
- revêtement de la structure ainsi obtenue à l'intérieur et à l'extérieur avec une étoffe biaxiale (2) qui est fixée aux tubes (1) au moyen d'une résine.

8. Procédé selon l'une quelconque des revendications précédentes, dans lequel les étapes suivantes sont prévues :
- fourniture d'un moule mâle de la coque
- agencement des tubes (1) sur ledit moule mâle et arrimage des tubes (1) sur le moule au moyen d'une résine ;
- revêtement de la structure ainsi obtenue à l'extérieur et à l'intérieur avec une étoffe biaxiale (2) qui est fixée aux tubes (1) au moyen d'une résine.

9. Structure de coque ou de fuselage obtenue avec le procédé selon l'une quelconque des revendications 1 à 8.
